Europäisches Patentamt

(19) European Patent Office

Office européen des brevets

(11) Publication number: **0 251 499**
**A1**

## (12) EUROPEAN PATENT APPLICATION

(21) Application number: 87304854.0

(22) Date of filing: 02.06.87

(51) Int. Cl.4: **B65G 69/28**

(30) Priority: 01.07.86 GB 8616056
18.07.86 GB 8617578

(43) Date of publication of application:
07.01.88 Bulletin 88/01

(84) Designated Contracting States:
CH DE FR LI NL

(71) Applicant: **Smiths Industries Public Limited Company**
**765, Finchley Road**
**London, NW11 8DS(GB)**

(72) Inventor: **Walker, Peter Frederick**
**59 Ducklington Lane**
**Witney Oxfordshire OX8 7JE(GB)**

(74) Representative: **Flint, Jonathan McNeill**
**SMITHS INDUSTRIES PUBLIC LIMITED**
**COMPANY 765 Finchley Road**
**London NW11 8DS(GB)**

(54) **Loading ramps.**

(57) An hydraulic dock leveller has a loading platform 1 with a pivoted rear end 2 and a forward end 11 that is raised or lowered by an hydraulic actuator 10. A lip 12 is hinged at the forward end 11 and can be raised by a separate hydraulic actuator 13. An hydraulic circuit 100 separately powers the two actuators and allows the weight of the lip 12 alone to displace it from a raised to a lowered position when the platform is raised off a vehicle being loaded. The lip actuator 13 is single-acting or regenerative and is connected to the pressure return line 114 via a yield relief valve 144, so that pressure supplied to the lip actuator is returned to a reservoir if the lip is obstructed while being raised. A shuttle valve 123 has an inlet connected to the pressure power pack 101, one outlet connected to the platform actuator 10, and another outlet connected to a pressure return line 115. The shuttle valve is operated by difference in load across it and has a small pressure bleed 124 between the inlet and the other outlet to speed its operation.

Fig.8.

## LOADING RAMPS

This invention relates to adjustable loading ramps of the kind including a platform, a first hydraulic circuit that adjusts the height of one edge of the platform, a lip hinged with the platform at the one edge, and a second hydraulic circuit arranged to raise the lip from a first position in which it extends downwards at an angle to the platform to a second position in which the lip extends substantially parallel with platform.

It is common practice to use such ramps, sometimes called dock levellers, to bridge the gap between the rear of a lorry or other vehicle and a raised platform or floor level, such as in a warehouse. This enables fork lift trucks or trolleys etc. to enter the rear of the vehicle to speed loading or unloading.

Such dock levellers usually comprise a flat platform, typically about three metres long, which is pivoted at its rear end, and the front end of which can be raised and lowered by means of an hydraulic circuit. The dock leveller has a lip which is hinged to the front of the platform and which can also be raised and lowered by means of an hydraulic circuit, the flap being about half a metre long. Initially the dock leveller is positioned flat, that is, with the front of the platform down and with the lip hanging vertically downwards from the platform. A lorry to be loaded or unloaded reverses up to the front edge of the platform, close to it, and hydraulic power is then supplied to the dock leveller. This causes the front edge of the platform, that is, the edge closer to the lorry, to be raised to its limit, which will be above the floor level of the lorry. Resistance to further displacement of the platform then causes hydraulic power to be supplied to an actuator that lifts the lip about its hinged rear edge until it is parallel with the platform. The platform is then lowered with the lip in this extended position until the lip comes to rest on the floor of the lorry.

When it is desired to raise the platform to allow the lorry to drive away, hydraulic power is supplied to lift the front end of the platform. Simultaneously with doing this, hydraulic power is supplied to the lip actuator to cause it to be pulled down to its original orientation at right angles to the platform surface. By the time the platform has been raised again to its limit of travel, the lip will have been fully retracted and the platform can be lowered with the lip in its down position to be stowed clear of the lorry.

These previous forms of dock levellers suffer from disadvantages because the lip is powered to return to its retracted position as the platform is raised from the floor of the vehicle. This can cause the front edge of the lip to be forced down into the floor of the vehicle causing damage to the vehicle floor as the lip is pulled rearwardly. Also, the lip may not be fully retracted before the platform is lowered to its stored position which may cause the lip to catch on a part of the rear of the vehicle. Furthermore, the edge of the lip presents a sharp edge which can be dangerous while it is being extended. Previous dock levellers can also be slow to respond.

It is an object of the present invention to provide an hydraulic loading ramp by which these disadvantages can at least in part be alleviated.

According to one aspect of the present invention there is provided an adjustable loading ramp of the above-specified kind, characterised in that the second hydraulic circuit enables the weight of the said lip to displace it from the second position to the first position without the application of hydraulic power to the circuit.

In this way, when the platform is raised from the floor of the vehicle the hydraulic means is arranged such that the weight of the lip alone returns it to its retracted position, thereby avoiding undue pressure on the floor of the vehicle and the damage this can cause. Because the lip is free to swing into its retracted position once it has cleared the rear edge of the vehicle floor, there is no danger of it catching on any part of the vehicle when the platform is lowered again. This also enables the platform to be lowered as soon as the lip has swung clear of the vehicle without the platform having to be first raised to its full extent.

The ramp may include a shuttle valve having an inlet connected to a pressure source, a first outlet connected to an hydraulic actuator and a second outlet connected to a pressure return line, the shuttle valve having a shuttle member that is displaceable between a first position and a second position solely by difference in load across the shuttle member, the shuttle in the first position enabling pressure supply between the inlet and the first outlet and substantially isolating the first outlet from the second outlet and in the second position enabling pressure supply between the first outlet and the second outlet, and the shuttle member having a pressure bleed that allows a continuous pressure bleed between the inlet and the second outlet in both positions.

The shuttle valve is preferably coupled in the first hydraulic circuit, the actuator connected to the first outlet being connected to adjust the height of the platform. The area of the shuttle member subjected to pressure from the pressure source is preferably greater than the area of the shuttle member subjected to pressure in the pressure return line such that equal pressures from the pressure source and return line cause an unequal loading thereby displacing the shuttle member to a position in which the platform actuator is isolated from the pressure return line.

The second hydraulic circuit may include a relief valve which enables pressure relief from the second hydraulic circuit and thereby reduces upward displacement of the lip relative to the platform which pressure in the second hydraulic circuit rises above that required to raise the lip, such as when displacement of the lip is obstructed.

The ramp preferably includes a platform actuator and a lip actuator coupled independently in the first and second hydraulic circuits respectively. The lip actuator is preferably a single-acting or regenerative actuator.

The second hydraulic circuit may include a sequence valve connected intermediate a lip actuator and a power supply line connected with both the first and second hydraulic circuits, the sequence valve having a first position in which it isolates the lip actuator from the power supply line and a second position in which it connects the power supply line to the lip actuator when the pressure in the power supply line rises above a predetermined level following the platform being raised to its upper limit of displacement.

The sequence valve in its first position may connect the lip actuator with a return line so that hydraulic fluid can flow out of the lip actuator.

The ramp preferably includes an adjustable flow control restricter connected intermediate the sequence valve and the return line by which the speed of descent of the lip can be controlled.

A dock leveller and its method of operation, according to the present invention, will now be described, by way of example, with reference to the accompanying drawings, in which:

Figures 1 to 6 are side elevation views showing operation of the dock leveller at different stages;

Figure 7 is a plan view of the dock leveller;

Figure 8 is a schematic diagram showing the hydraulic circuit of the dock leveller, and

Figure 9 shows a part of the hydraulic circuit in greater detail.

The dock leveller comprises a rigid steel platform 1 which is typically three meters long by two meters wide and which is mounted by a pivot 2 at its rear end level with the floor 3 of a loading bay. An hydraulic actuator 10 is coupled to the underside of the platform 1 for enabling the front edge 11 of the platform to be raised and lowered. At the front edge 11 is hinged a rigid lip member 12 which extends across the width of the platform 1 and is about half a metre long. A second hydraulic actuator 13 is coupled between the underside of the lip member 12 and the platform 1 to enable the lip member to be displaced relative to the platform about its pivoted edge. The hydraulic actuators 10 and 13 are connected as part of an hydraulic circuit indicated generally by the numeral 100 and described in detail below. It will be appreciated that additional actuators can be used according to the size and purpose of the dock leveller.

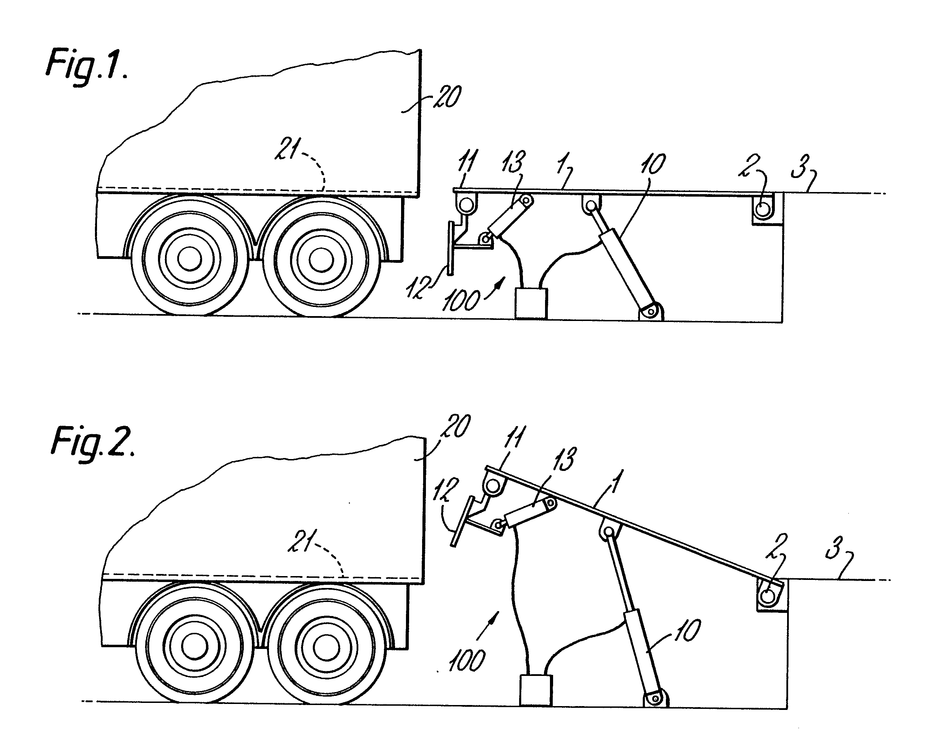

In its normal, stowed position shown in Figure 1, no hydraulic power is applied to either actuator 10 or 13, and the platform 1 lies horizontal with the lip member 12 hanging vertically down. A lorry 20, or other vehicle to be loaded, reverses to the front of the loading bay, coming to rest close to the front edge of the dock leveller. The rear of the lorry 20 must be separated from the front edge 11 of the platform by a distance less than that of the length of the lip member 12.

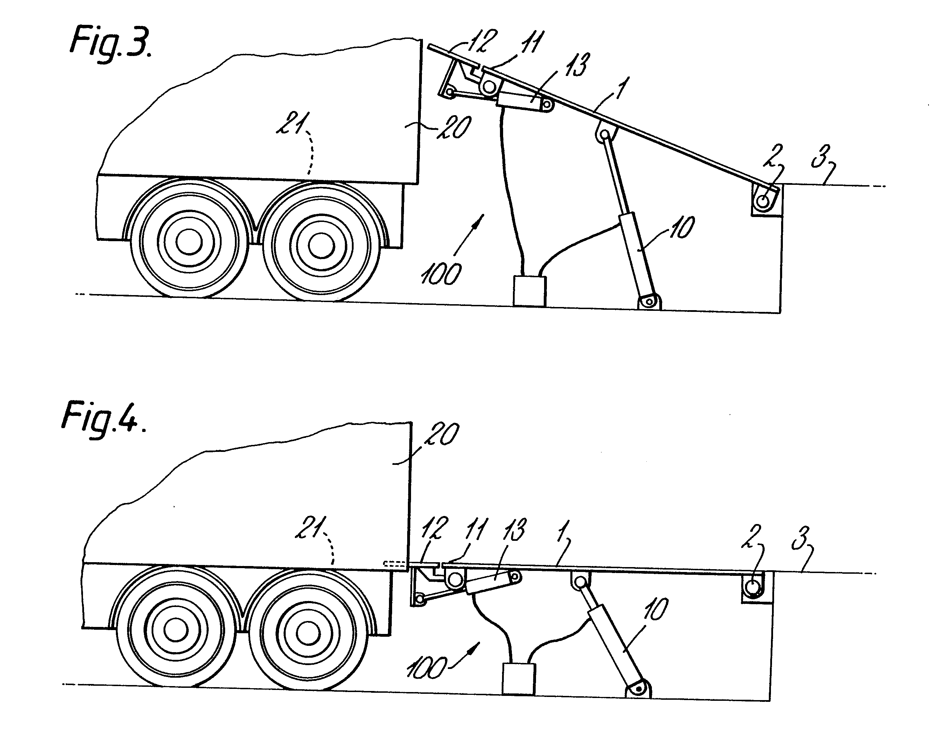

The operator then starts the dock leveller into operation which causes hydraulic power to be applied to the platform actuator 10, thereby raising the front edge 11 of the platform 1 to the position shown in Figure 2 in which it is above the level of the floor 21 of the lorry 20. When the platform 1 reaches its limit of upward travel, hydraulic power is automatically supplied to the actuator 13. This causes the lip member 12 to be raised from its initial, downward position at right angles to the platform 1, to the position shown in Figure 3 in which it is parallel and level with the platform.

Hydraulic power is then removed from the platform actuator 10, allowing the front edge 11 of the platform 1 to sink down at a controlled rate. The lip 12 is maintained in an extended position so that it comes to rest on the floor 21 of the vehicle 20, as shown in Figure 4. Trolleys and fork lift trucks can now be driven into and out of the lorry from the loading bay floor 3 over the dock leveller for as long as necessary.

As so far as described, the operation of the dock leveller is entirely conventional.

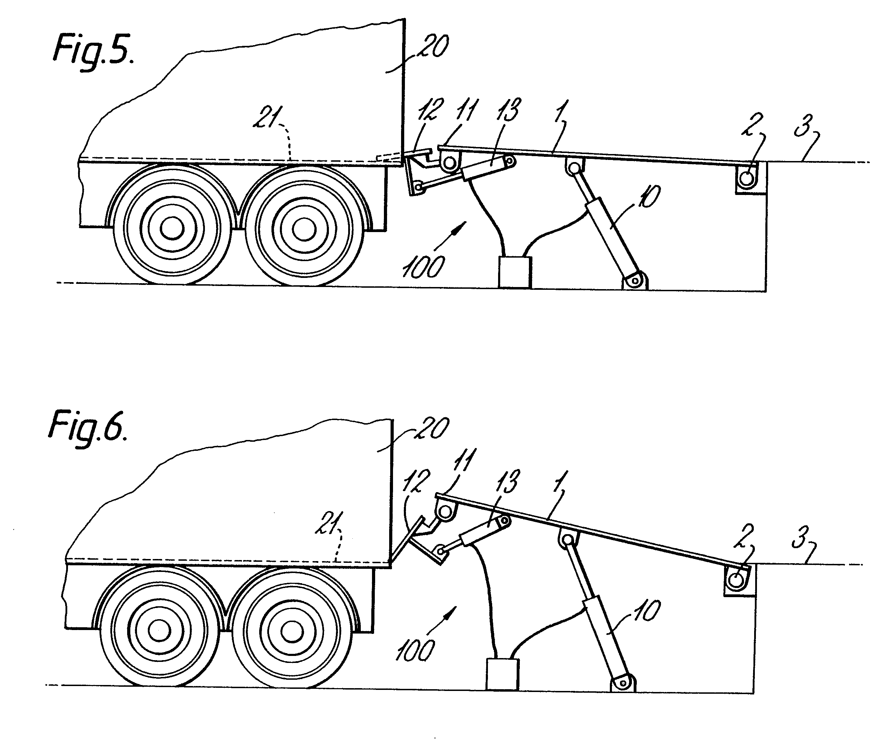

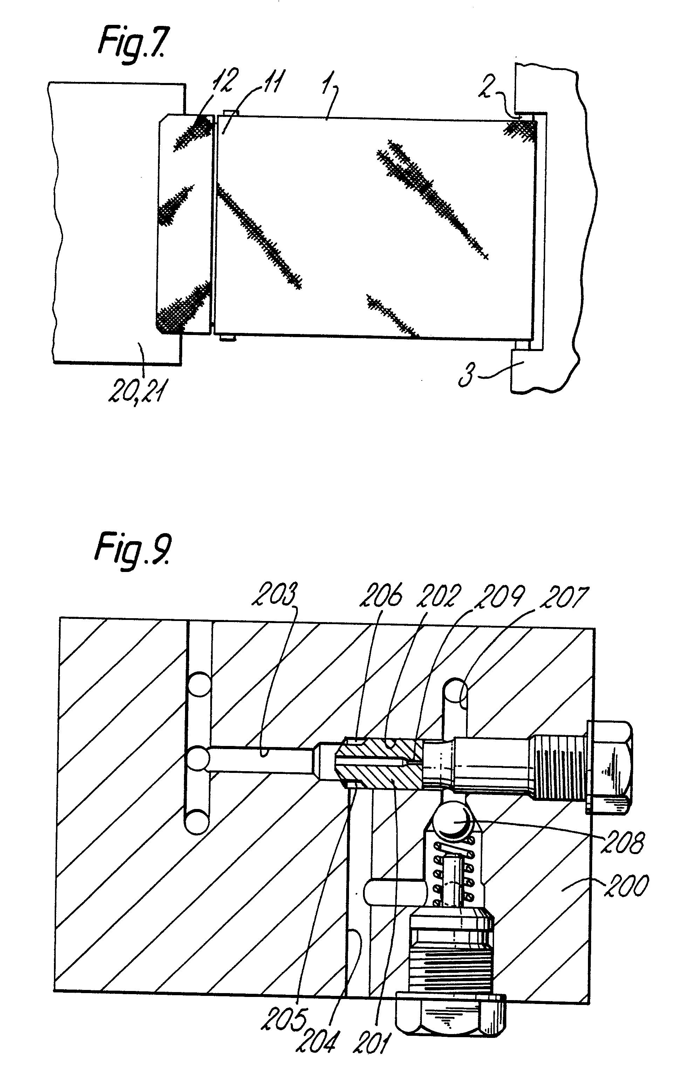

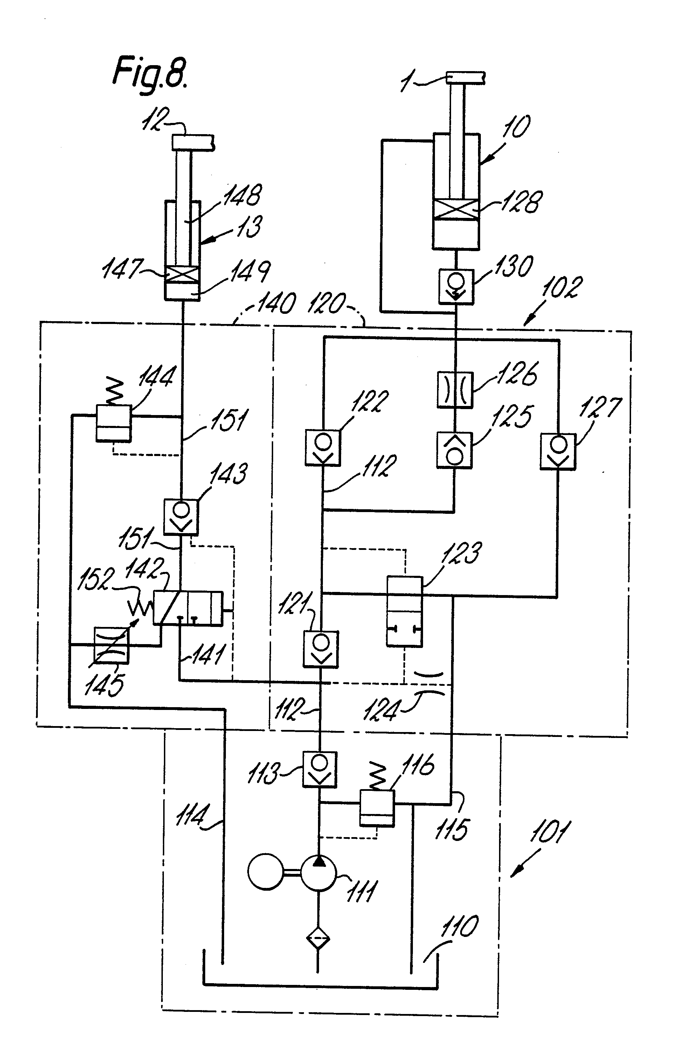

When loading or unloading has been completed, the dock leveller is raised to clear the floor 21 of the lorry 20 and to allow it to be driven away. This is achieved by reapplying hydraulic power to the platform actuator 10 so as to raise its front edge 11 above the floor. While this is being done, no hydraulic power is applied to the lip actuator 13, instead the actuator is opened to allow the weight of the lip member 12 itself to force hydraulic fluid around the actuator and to a fluid reservoir, thereby allowing the lip member 12 to fall in a controlled manner, into its rest position at right angles with the platform. The front edge of the lip member 12 will therefore be dragged rearwardly along the floor 21 of the vehicle, as shown in Figures 5 and 6, until it clears the rear edge of the vehicle when it will swing quickly to its rest position. The floor 21 of the vehicle will therefore only be subject at the most, to the weight of the lip member being dragged along it, in contrast to previous arrangements in which hydraulic power is applied in the reverse sense to the lip actuator to drive it into its retracted position and thereby possibly apply excessive force to the vehicle floor. Also, the previous powered-return lips, the lip continues to retract slowly as the platform is lifted away from the vehicle floor. This means that there is a risk that the lip will not be fully retracted if the platform is lowered before it has been fully raised, thereby making it possible for the lip to catch on the rear of the vehicle. If the platform has to be fully raised before being lowered, this increases the time taken before the vehicle can be driven away.

The hydraulic circuit 100 by which the platform 1 and lip 12 are displaced will now be described with reference to Figures 8 and 9. The circuit 100 comprises a power pack 101, which provides the hydraulic power, a valve arrangement 102, which controls the application of the hydraulic power, and the two actuators 10 and 13.

The power rack 101 is of conventional form, comprising a fluid reservoir 110 and a pressure source in the form of a pump 111 which delivers hydraulic power to outlet line 112 via a check valve 113. Two fluid return lines 114 and 115 are provided, one of these 115 being connected to the outlet line 112 intermediate the pump 111 and check valve 113 via a valve 116. The valve 116 remains closed, or off, preventing fluid flow between the outlet line 112 and the return line 115 except when pressure rises above a pre-set safety level.

The valve arrangement 102 is divided into two parts 120 and 140, one of which 120 controls the application of hydraulic power to the platform actuator 10 and the other 140 of which controls the application of hydraulic power to the lip actuator 13.

In the platform side 120 of the valve arrangement 102, the output line 112 of the power pack 101 is supplied to the platform actuator 10 via a series connection of first and second check valves 121 and 122. The downstream side of the first check valve 121 is also connected to the return line 115 via a novel shuttle valve 123 which is operated by the differential pressure across the first check valve and the construction of which is described later. In this way, the shuttle valve 123 is closed, or off, isolating the outlet pressure line 112 from the return line 115 when the upstream side of the first check valve 121 is at a higher pressure than the downstream side. When the power pack 101 is turned off, so that pressure at the upstream side of the check valve 121 falls below that of the downstream side, the shuttle valve 123 changes state to connect the check valve to the return line 115. There is also a bleed connection 124 between the upstream side of the first check valve 121 and the return line 115 which allows a small, continuous flow of hydraulic fluid into the return line to ensure decay of the upstream pressure when pressure supply from the power pack 101 is turned off.

The second check valve 122 is connected in parallel with a series arrangement of an anti-siphon valve 125 and a manually-adjustable flow control restricter 126. The anti-siphon valve 125 is connected in such a way as to allow hydraulic fluid to flow out of the actuator 10, that is, in the opposite direction to the flow permitted by the second check valve 122. The inlet to the actuator 10 is also connected to the return line 115 via a float valve 127 which normally prevents return flow of fluid to the return line. The valve 127 allows fluid to be drawn into the actuator 10 if its piston 128 is pulled outwardly of the cylinder 129 by an external force such as caused by the floor 21 of the vehicle rising as it is unloaded.

The piston 128 of the platform actuator 10 is displaceable within a cylinder 129, pressure being supplied to the base end of the cylinder, via a velocity fuse 130, and to the annulus end of the cylinder, so that it operates in a differential or regenerative manner.

The valve arrangement 102 is preferably provided by a valve block, a part of which 200 is shown in Figure 9. This part 200 includes the shuttle valve 123 the check valve 121 and the bleed 124. The shuttle valve 123 is provided by a cylindrical shuttle member 201 that is slidable along a bore 202. The left-hand end of the bore 202 opens into a passage 203 extending axially of the bore which communicates with the return line 115. A second passage 204 opens into the side of the bore 202 close to its left-hand end; this passage communicates with that portion of the hydraulic power line 112 extending to the second check valve 122. The shuttle 201 is stepped to proved a portion 205 of reduced diameter at its left-hand, this being located such that an annular recess 206 is formed between the bore 202 and the shuttle 201 which opens into the passageway 204.

Pressure inlet from the power pack 101, as supplied on line 112, is supplied to an inlet passageway 207 which communicates with the passage 204 via a spring-loaded ball valve 208 providing the first check valve 121. The inlet passageway 207 also communicates with the right-hand end of the bore 202 so that the shuttle 201 is displaced to the left or right end of the bore according to whether the pressure in the inlet passageway 207 is greater or less than that in the passage 204. The bleed 124 is provided by an axial channel 209 through the shuttle which is restricted in size at one end. In this way, there is a continuous, limited flow of fluid between the inlet passageway 207 and the passage 203 that communicates with the return line 115.

When the loading difference across the first check valve 121 is such that the load caused by pressure in passageway 207 is greater than the load caused by pressure in passageway 204, the shuttle 201 is forced to the left-hand end of the bore 202 thereby isolating passage 203 from passage 204. When the load difference across the first check valve 121 is in the opposite sense, the shuttle 201 is forced to the right-hand end of the bore 202 thereby establishing connection between the two passages 203 and 204. Because the area of the shuttle member 201 exposed to pressure at the right-hand end of the bore 202 is greater than the area exposed to pressure at the left-hand end, equal pressure across the shuttle member will cause an unequal loading and displace the shuttle member to the left of the bore.

The shuttle valve of the present invention is of simple construction without requiring any spring return and has a fast response because of the bleed in the shuttle member.

With reference now again to Figure 8, in the lip side 140 of the valve arrangement 102 the power outlet from the power pack 101 is supplied on line 141 to the lip actuator 13 via a sequence valve 142, a pilot check valve 143 and a fluid line 151. The inlet to the lip actuator 13 is also connected to the fluid return line 114 via a yield relief valve 144 that is controlled by pressure in line 151. The fluid return line 114 is also connected to the sequence valve 142 via an adjustable flow control restricter 145. Both the sequence valve 142 and the pilot check valve 143 are controlled by the pressure on line 141. The sequence valve 142 is normally held by a spring 152 in the position shown in Figure 8 in which the pressure line 141 is disconnected from the actuator 13. The actuator 13 is instead connected to the fluid return line 114 via the restricter 145 and the pilot check valve 143. The sequence valve 142 is only displaced to its other state, to connect the actuator 13 to the pressure line 141, when the pressure in line 141 rises sufficient to overcome the spring 152. The pilot check valve 143 normally only allows flow towards the actuator 13, but allows flow in the reverse direction when there is pressure on line 141 sufficient to cause displacement of the platform actuator 10.

The lip actuator 13 comprises a piston 147 and ram 148 that is slidable along a cylinder 149 in a similar manner to the platform actuator 10. Fluid pressure is preferably communicated directly only to the base end of the cylinder 149 so that the actuator is of the single acting kind. Alternatively, pressure can also be supplied from line 151 to the annulus end via a speed control device by which the speed at which the lip 12 is raised can be controlled. In this arrangement, the actuator 13 is of the regenerative kind.

The operation of the dock leveller will now be described in greater detail.

In its rest position, with no hydraulic power provided by the power pack 101, the anti-siphon valve 125 and the shuttle valve 123 are open to allow fluid to flow out of the platform actuator 10 into the reservoir 110 while the float valve 127 is closed. The weight of the platform 1 is thereby free to force the piston 128 to its lowest position in the cylinder 129 so that the platform lies in its lowest, horizontal positon. Similarly, the lip actuator 13 is in its retracted position. Although the pilot check valve 143 is closed, the fluid in the base end of the lip actuator 13 has previously been forced to the reservoir 110 as will become apparent from the description of later stages in the operation of the dock leveller.

As soon as the power pack 101 is turned on, fluid pressure is supplied to the valve arrangement 102 via line 112 closing the shuttle valve 123 and the anti-siphon valve 125. In this way, fluid pressure is supplied to the platform actuator 10 causing the piston 128 to be displaced outwardly of the cylinder 129 and thereby raising the platform 1 in the manner shown in Figure 2. While the platform 1 is being elevated, fluid pressure in the pressure line 141 to the lip part 140 of the valve arrangement 102 is insufficient to displace the sequence valve 142 from the position shown in Figure 8 in which line 141 is isolated from the lip actuator 13. The pressure in line 141 is, however, sufficient to open the pilot check valve 143. The lip 12 therefore remains unextended, hanging down from the front edge 11 of the platform 1.

When the platform actuator 10 reaches its upper limit of travel, because the power pack 101 is still supplying hydraulic fluid to the valve arrangement 102, the pressure in lines 112 and 141 will increase. The increase in pressure in line 141 soon becomes sufficient to displace the sequence valve 142 against the action of its spring 152 to its other state in which the return line 114 is isolated from the lip actuator 13, and the pressure line 141 is instead connected to supply fluid to the base end of the lip actuator 13. This causes the ram 148 to be extended out of the cyliner 149, thereby raising the lip 12.

When the lip 12 has been fully raised, the power pack 101 is turned off by the operator. Alternatively, the power pack may be turned off automatically in response to a limit detector which senses full extension of the lip.

As soon as the power pack 101 is turned off, the anti-siphon valve 125 and the shuttle valve 123 opens, thereby allowing pressure in the base of the platform actuator 10 to be forced to the reservoir 110 by the weight of the platform 1, via line 115, at a rate controlled by the setting of the flow control device 126. The lip 12, however, remains in its extended position, as shown in Figure 3, as the platform 1 sinks back down, even though the sequence valve 142 resumes its initial position, because the pilot check valve 143 is closed by the fall in pressure in line 141.

The platform 1 is therefore lowered at a controlled rate until the lip 12 of the dock leveller comes to rest on the floor 21 of the vehicle 20, thereby preventing further downward displacement.

The anti-siphon valve 125 prevents hydraulic fluid draining from the actuator 10 if it should be higher than the power pack 101, thereby reducing the risk of air entering the cylinder 129 around the gland seals in the actuator.

The float valve 127 allows fluid to flow into the actuator 10 while the dock leveller is at rest on the floor 21 of the vehicle 20 so that the platform 1 can move up and follow any increase in height of the floor of the vehicle during unloading. During loading, the height of the floor 21 falls and fluid flows out of the actuator 10 through the anti-siphon valve 125.

When it is desired to lift the dock leveller from the floor 21 of the vehicle 20, the power pack 101 is switched on again to supply hydraulic fluid to the valve arrangement 102. This pressure causes the pilot check valve 143 to open, with the state of the sequence valve 142 being unaltered, so that the base of the lip actuator 13 is connected to the fluid return line 114. The pressure also causes the shuttle valve 123, the anti-siphon valve 125 and the float valve 127 to close again so that pressure is applied to the platform actuator 10 causing it to lift the platform 1. As the platform 1 is raised above the floor 21 of the vehicle 20, the weight of the lip 12 forces the actuator 13 gradually into a retracted position, the front edge of the lip resting on the vehicle floor and dragging along it as the platform is lifted, as shown in Figure 5. As soon as the front edge of the lip 12 clears the rear edge of the vehicle floor 21 it is free to swing down to its rest position at right angles with the platform 1, at a rate set by the control device 145.

Once the lip 12 has cleared the back of the vehicle, the dock leveller can be lowered back to its rest position simply by turning off the power pack 101. This causes the anti-siphon valve 125 and the shuttle valve 123 to open allowing fluid to flow out of the platform actuator 10 into the reservoir 110.

The purpose of the bleed 124 is to improve the speed of operation of the shuttle valve 123. It achieves this by increasing the speed at which the pressure in line 112, between the two check valves 113 and 121, is equalised with the pressure in the return line 115 once the power pack has been turned off. This ensures that the shuttle valve 123 returns more rapidly to its open position.

The yield relief valve 144 in the lip side 140 of the valve arrangement provides a safety feature. This valve 144 is normally held closed but is opened when the pressure in line 151 is of a preset magnitude which is greater than caused by normal unobstructed lifting of the lip. Thus, if the lip 12 should meet an obstruction while being lifted, the pressure in line 151 increases and the yield valve 144 opens to allow fluid to flow to the reservoir 110 and thereby prevent further deflection of the lip 12. It is only possible to use a yield relief valve satisfactorily in the novel arrangement of the present invention in which the lip actuator 13 is returned to its rest position solely by the weight of the lip and not by applied external hydraulic pressure.

Because the lip actuator 13 is of a single-acting or regenerative type, only pressure sufficient to raise the lip 12 is required. In contrast, double acting actuators where pressure from the main lift actuator is also applied to the annulus side of the piston of the lip actuator, require additional pressure to displace the piston against the pressure of fluid in the circuit connected to the annulus end of the cylinder. The pressure required to drive the lip actuator 13 is therefore lower than previously possible which enables the yield relief valve 144 to be sensitive and respond to relatively small increases in pressure in the line 151 when free elevation of the lip member is obstructed. The yield relief valve 144 enables the lip 12 to yield should its normal operation be obstructed. The force exerted by the lip actuator 13 when the lip 12 is obstructed is also kept to a minimum by keeping the size of the actuator as small as possible so that the yield relief pressure does not cause a large increase in the force.

The hydraulic circuit controlling operation of the platform 1 and the lip 12 are independent of one another. Because the lip 12 is returned to the retracted position solely by its own weight, it is free to slide along the floor of the vehicle and ride up over any obstructions such as protruding bolt heads or the like, without causing damage. Also, because the lip 12 is free to swing to its retracted position as soon as it clears the floor of the vehicle, the dock leveller does not need to be raised as high as with previous levellers and avoids the risk of the lip catching on parts of the rear of the vehicle, such as its rear lights, when the platform is lowered.

## Claims

1. An adjustable loading ramp including a platform, a first hydraulic circuit that adjusts the height of one edge of the platform, a lip hinged with the platform at the one edge, and a second hydraulic circuit arranged to raise the lip from a first position in which it extends downwards at an angle to the platform to a second position in which the lip extends substantially parallel with platform, characterised in that the second hydraulic circuit (140) enables the weight of the lip (12) to displace it from the second position to the first position without the application of hydraulic power to the circuit (140).

2. A loading ramp according to Claim 1, characterised in that the ramp includes a shuttle valve (123) having an inlet (207) connected to a pressure source (101), a first outlet (204) connected to an hydraulic actuator (10) and a second outlet (203) connected to a pressure return line (115), that the shuttle valve (123) has a shuttle member (201) that is displaceable between a first position and a second position solely by difference in load across the shuttle member, that the shuttle in the first position enables pressure supply between the inlet (207) and the first outlet (204) and substantially isolates the first outlet (204) from the second outlet (203) and in the second position enables pressure supply between the first outlet (204) and the second outlet (203), and that the shuttle member (201) has a pressure bleed (202) that allows a continuous pressure bleed between the inlet (207) and the second outlet (203) in both positions.

3. A loading ramp according to Claim 2, characterised in that the shuttle valve (123) is coupled in the first hydraulic circuit (102), and that the actuator (10) connected to the first outlet (204) is connected to adjust the height of the platform (1).

4. A loading ramp according to Claim 2 or 3, characterised in that the area of the shuttle member (201) subjected to pressure from the pressure source is greater than the area of the shuttle member subjected to pressure in the pressure return line (115) such that equal pressures from the pressure source and return line cause an unequal loading thereby displacing the shuttle member to a position in which the platform actuator (10) is isolated from the pressure return line.

5. A loading ramp according to any one of the preceding claims, characterised in that the second hydraulic circuit (140) includes a relief valve (144) which enables pressure relief from the second hydraulic circuit and thereby reduces upward displacement of the lip (12) relative to the platform (1) when pressure in the second hydraulic circuit rises above that required to raise the lip, such as when displacement of the lip is obstructed.

6. A loading ramp according to any one of the preceding claims including a platform actuator and a lip actuator, characterised in that the platform actuator (10) and the lip actuator (13) are coupled independently in the first and second hydraulic circuits (120 and 140) respectively.

7. A loading ramp according to Claim 6, characterised in that the lip actuator (13) is a single-acting or regenerative actuator.

8. A loading ramp according to any one of the preceding claims, characterised in that the second hydraulic circuit (140) includes a sequence valve (142) connected intermediate a lip actuator (13) and a power supply line (112) connected with both the first and second hydraulic circuits (140, 120), that the sequence valve (142) has a first position in which it isolates the lip actuator (13) from the power supply line (112) and a second position in which it connects the power supply line to the lip actuator (13) when the pressure in the power supply line rises above a predetermined level following the platform (1) being raised to its upper limit of displacement.

9. A loading ramp according to Claim 8, characterised in that the sequence valve (142) in its first position connects the lip actuator (13) with a return line (114) so that hydraulic fluid can flow out of the lip actuator.

10. A loading ramp according to Claim 8 or 9, characterised in that the ramp includes an adjustable flow control restricter (145) connected intermediate the sequence valve (142) and the return line (114) by which the speed of descent of the lip (12) can be controlled.

Fig.1.

Fig.2.

0 251 499

Fig.3.

Fig.4.

Fig.5.

20

21

12 11 13 1 2 3

100 10

Fig.6.

20

21

12 11 13 1 2 3

100 10

## Fig.7.

12 11 1 2

20,21 3

## Fig.9.

203 206 202 209 207

208

200

205 204 201

Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 388 413 (CLARKE) * column 3, line 26 - column 8, line 46; figures 1-7 * | 1 | B 65 G 69/28 |
| A | | 2,7 | |
| | --- | | |
| X | EP-A-0 117 394 (ALRTEN) * page 2, line 4 - page 6, line 12; figures 1, 2 * | 1 | |
| A | | 5-7 | |
| | --- | | |
| A | US-A-3 290 709 (WHITENACK et al.) * colulmn 3, line 45 - column 4, lines 18, 68 - column 5, line 40 * | 1,7-10 | |
| | ----- | | |

TECHNICAL FIELDS SEARCHED (Int. Cl.4)

B 65 G 69/00

The present search report has been drawn up for all claims

| Place of search | Date of completion of the search | Examiner |
|---|---|---|
| BERLIN | 30-09-1987 | SIMON J J P |